# DEMANDE DE BREVET EUROPEEN

(11) **EP 1 662 409 A1**
(43) Date de publication de la demande: **31.05.2006**
(21) Numéro de dépôt: 05300938.7
(22) Date de dépôt: 17.11.2005
(51) Int. Cl.: G06F 17/30

(54) **Localisation de fichier**

(30) Priorité: 26.11.2004 FR 0412650
(71) Demandeur: FRANCE TELECOM, 75015 Paris (FR)
(72) Inventeur: Grimault, Jean-Luc, 14120 Mondeville (FR); Brunel, Jérôme, 14220 Combray (FR); Vongphouthone, Aline, 14000 Caen (FR)
(74) Mandataire: Cabinet Martinet & Lapoux

(57) **Abrégé**

Un système informatique localise depuis le premier dispositif de traitement un fichier prédéterminé qui est mémorisé dans le premier dispositif ou au moins un deuxième dispositif de traitement connecté au premier dispositif. Le système comprend un moyen (MM) pour transmettre des requêtes depuis le premier dispositif respectivement aux deuxièmes dispositifs, un moyen pour transmettre depuis chaque deuxième dispositif au premier dispositif un fichier de mise à jour contenant au moins un identificateur du fichier prédéterminé, un moyen (MM) pour mettre à jour dans le premier dispositif un fichier de localisation en fonction des fichiers de mise à jour transmis au premier dispositif, et un moyen (MU) pour afficher dans le premier dispositif la localisation du fichier prédéterminé en fonction du fichier de localisation mis à jour.

## Description

La présente invention concerne un procédé pour localiser au moins un fichier prédéterminé, un fichier prédéterminé étant mémorisé dans un premier dispositif de traitement de données ou au moins un deuxième dispositif de traitement de données connecté au premier dispositif, depuis le premier dispositif.

Dans l'état de la technique, certains systèmes de gestion de fichier ou de synchronisation de fichier permettent de visualiser simultanément deux arborescences d'un répertoire localisé dans deux dispositifs de traitement de données. Dans ce cas, pour qu'un usager constate la présence d'un fichier dans les deux dispositifs, il doit chercher visuellement la présence de ce fichier dans les deux arborescences.
Les systèmes de gestion de fichier classiques font correspondre un dispositif à des fichiers contenus dans le dispositif et localise les fichiers dans le dispositif et ne font pas correspondre un fichier à des dispositifs contenant le fichier. Il existe donc un besoin de déterminer la localisation d'un fichier parmi des dispositifs de traitement de données.

La présente invention vise à remédier aux inconvénients précités en localisant au moins un fichier prédéterminé parmi des dispositifs de traitement de données.

Pour atteindre cet objectif, un procédé pour localiser au moins un fichier prédéterminé depuis un premier dispositif de traitement de données, le fichier prédéterminé étant mémorisé dans le premier dispositif ou dans au moins un deuxième dispositif de traitement de données connecté au premier dispositif est caractérisé en ce qu'il inclut des étapes de :
création (E2) d'un fichier de localisation de fichier prédéterminé dans le premier dispositif,
transmission (E3) de requêtes depuis le premier dispositif respectivement aux deuxièmes dispositifs,
réception (E4) par le premier dispositif d'un fichier de mise à jour transmis par chaque deuxième dispositif et contenant au moins un identificateur de fichier prédéterminé, et
mise à jour (E5) du fichier de localisation en fonction d'au moins un fichier de mise à jour reçu par le premier dispositif.

Un fichier de mise à jour transmis par un deuxième dispositif peut comprendre au moins un identificateur de fichier prédéterminé correspondant à un fichier prédéterminé qui a été ajouté ou supprimé dans ce deuxième dispositif postérieurement à une date de dernière mise à jour prédéterminée, chaque identificateur étant associé à une information d'état indiquant si le fichier prédéterminé correspondant a été ajouté ou s'il a été supprimé.

Selon une autre caractéristique de l'invention, un fichier de mise à jour transmis par un deuxième dispositif peut comprendre au moins un identificateur de fichier prédéterminé correspondant à un fichier prédéterminé qui a été ajouté ou supprimé dans au moins l'un des deuxièmes dispositifs, appelé dispositif courant, postérieurement à une date de dernière mise à jour prédéterminée, chaque identificateur étant associé à au moins une information de localisation du fichier prédéterminé correspondant dans le dispositif courant, chaque information de localisation étant associée, d'une part, à une information d'état indiquant si le fichier prédéterminé correspondant a été ajouté ou s'il a été supprimé, et, d'autre part, à une date d'addition/suppression.
Le procédé peut comprendre en outre une étape de sélection par le premier dispositif d'un fichier prédéterminé, et une étape de transmission du fichier sélectionné vers un deuxième dispositif, ladite étape de transmission étant destinée à être exécutée lorsque le fichier sélectionné n'est pas déjà mémorisé dans ce deuxième dispositif.
Le procédé peut comprendre en outre une étape de sélection par le premier dispositif d'un fichier prédéterminé, et une étape de transmission vers un deuxième dispositif d'une commande de suppression du fichier prédéterminé sélectionné, ladite étape de transmission étant destinée à être exécutée lorsque le fichier prédéterminé sélectionné est mémorisé dans ce deuxième dispositif.

L'invention a aussi pour objet un système informatique pour localiser au moins un fichier prédéterminé depuis un premier dispositif de traitement de données, le fichier prédéterminé étant mémorisé dans le premier dispositif ou dans au moins un deuxième dispositif de traitement de données connecté au premier dispositif. Le système informatique est caractérisé en ce qu'il comprend :
un moyen pour créer un fichier de localisation de fichier prédéterminé dans le premier dispositif,
un moyen pour transmettre des requêtes depuis le premier dispositif respectivement aux deuxièmes dispositifs,
un moyen pour transmettre en réponse, depuis chaque deuxième dispositif vers le premier dispositif, un fichier de mise à jour contenant au moins un identificateur de fichier prédéterminé, et
un moyen pour mettre à jour un fichier de localisation en fonction d'au moins un fichier de mise à jour reçu par le premier dispositif.

Enfin, l'invention se rapporte à un programme d'ordinateur apte à être mis en oeuvre dans un premier dispositif de traitement de données du type ordinateur pour localiser au moins un fichier prédéterminé depuis un premier dispositif de traitement de données, le fichier prédéterminé étant mémorisé dans le premier dispositif ou dans au moins un deuxième dispositif de traitement de données connecté au premier dispositif. Le programme comprend des instructions de programme qui, lorsque le programme est chargé et exécuté sur ledit premier dispositif, réalisent les étapes du procédé de l'invention pour localiser au moins un fichier prédéterminé depuis le premier dispositif.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un bloc-diagramme schématique d'un système de localisation de fichier prédéterminé selon l'invention ;
- la figure 2 est un algorithme d'un procédé de localisation de fichier prédéterminé selon l'invention ; et
- la figure 3 est un exemple d'interface d'usager indiquant la localisation de fichiers prédéterminés.

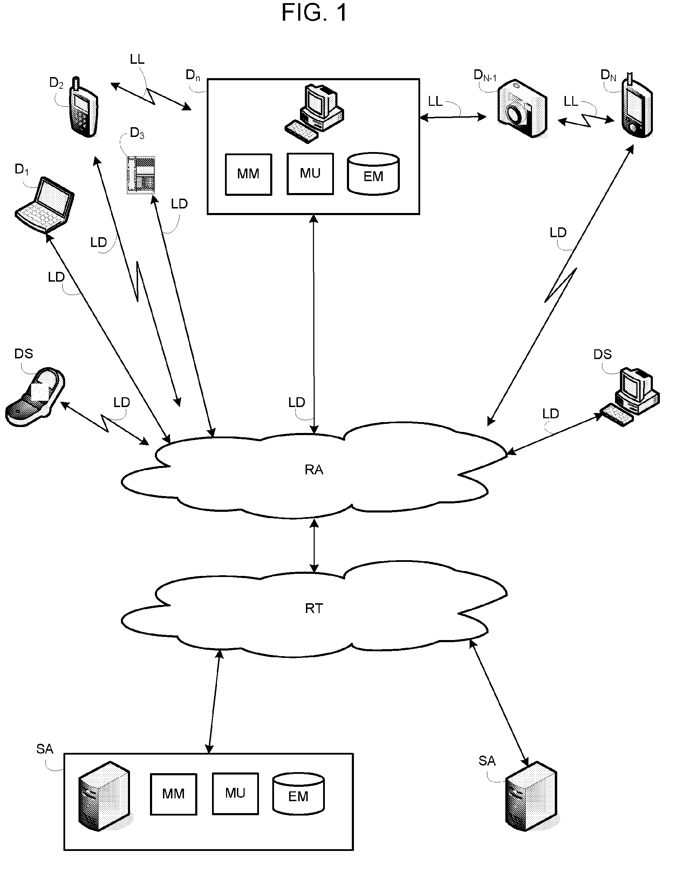

En référence à la figure 1, le système de localisation de fichier selon l'invention comprend des modules logiciels installés dans au moins un premier dispositif de traitement de données et au moins un deuxième dispositif de traitement de données. Le système de localisation comprend éventuellement un troisième dispositif de traitement.
Afin de ne pas surcharger la figure 1, on a représenté seulement quelques exemples de premiers dispositifs de traitement de données Dₙ et SA, de deuxièmes dispositifs de traitement de données D₁ à D_{N} avec n ≠ N, et de troisièmes dispositifs de traitement de données DS.
Les premiers, deuxièmes et troisièmes dispositifs de traitement de données comprennent chacun au moins un module logiciel d'interface utilisateur MU. Les premiers et deuxièmes dispositifs de traitement de données comprennent également un module logiciel de mise à jour MM et au moins un espace mémoire EM.
Chaque premier dispositif selon l'invention communique avec les autres dispositifs pour récupérer des informations de localisation de fichiers prédéterminés. Chaque deuxième dispositif selon l'invention est susceptible de fournir des informations de localisation à un premier dispositif. Chaque troisième dispositif DS ne possède pas de module de mise à jour MM et est simplement un terminal de consultation de la localisation de fichier prédéterminé.

Un premier ou deuxième ou troisième dispositif peut être un ordinateur personnel D_{N}, un ordinateur portable D₁, un terminal mobile D₂ dans un réseau cellulaire de radiocommunications, un terminal fixe de télécommunications D₃, un assistant numérique personnel PDA D_{N}, une console de jeux vidéo, un récepteur de télévision intelligent coopérant avec une télécommande à afficheur ou un clavier alphanumérique servant également de souris à travers une liaison infrarouge, un appareil photo numérique D_{N-1}, un caméscope numérique, une chaîne Hi Fi avec stockage, un lecteur DVD avec stockage, un baladeur numérique à disque dur, une tablette d'accès Internet, un serveur applicatif SA avec des espaces mémoires dédiés à des usagers, ou tout dispositif ou objet électronique de stockage de fichier personnel à un usager.

Généralement, un premier dispositif offre des capacités de liaison de télécommunication importante, comme un ordinateur personnel ou un serveur. Par contre, il est difficile par exemple pour un appareil photo numérique de communiquer avec un serveur sans recourir à une connexion à un ordinateur ou un terminal cellulaire mobile, un appareil photo numérique constituant le plus souvent un deuxième dispositif selon l'invention. En général, un deuxième dispositif dispose d'une capacité de traitement inférieure à celle du premier dispositif. Selon un autre exemple, un terminal cellulaire mobile offre une capacité de stockage limitée rendant impossible le stockage de nombreux fichiers personnels à l'usager du terminal, tels que des photos à haute définition, et peut recourir à une technique de "streaming" pour consulter par une visualisation en continue un fichier sans le télécharger. Le module de mise à jour MM est difficilement supportable par un terminal cellulaire mobile, notamment en raison de fonctionnalités de serveur auquel il fait appel. Par conséquent, un terminal cellulaire mobile est classiquement un troisième dispositif. Un ordinateur personnel, un ordinateur portable et un assistant numérique personnel communiquant peuvent être indifféremment des premiers ou deuxièmes ou troisièmes dispositifs de traitement de données selon l'invention.
Un serveur applicatif est un premier ou deuxième dispositif de traitement de données selon l'invention. Lorsqu'un premier dispositif est un ordinateur personnel, le serveur applicatif est un deuxième dispositif et le serveur communique avec l'ordinateur personnel à travers des réseaux d'accès RA et un réseau de télécommunication RT. Lorsqu'un troisième dispositif est un terminal cellulaire mobile, le serveur applicatif est un premier dispositif dialoguant sous la commande du terminal cellulaire.

Un premier dispositif selon l'invention privilégie les communications locales avec un ou des deuxièmes dispositifs. Par exemple, un premier dispositif est un ordinateur personnel Dₙ et des deuxièmes dispositifs sont respectivement un terminal cellulaire mobile D₂ et un serveur applicatif SA. La liaison privilégiée par l'ordinateur personnel avec le terminal cellulaire est une liaison locale LL représentée à la figure 1. Lorsque la liaison locale entre un premier dispositif et un deuxième dispositif donné n'est pas disponible, le premier dispositif peut communiquer avec le deuxième dispositif donné à travers un autre deuxième dispositif capable d'établir une connexion avec le deuxième dispositif donné. L'autre deuxième dispositif joue simplement le rôle d'intermédiaire de communication entre le deuxième dispositif donné et le premier dispositif. Par exemple, l'ordinateur Dₙ établit une liaison distante LD avec le terminal cellulaire D₂ par l'intermédiaire du serveur applicatif SA.
Une liaison de télécommunication distante LD utilise un réseau d'accès RA. Par exemple, le réseau d'accès RA comprend un réseau de radiocommunications, par exemple de type GSM (Global System for Mobile communications) avec un service GPRS (General Packet Radio Service), ou de type UMTS (Universal Mobile Telecommunications System). Selon un autre exemple, la liaison LD est une ligne téléphonique et le réseau d'accès RA comprend le réseau téléphonique commuté. Selon d'autres variantes, la liaison LD est une ligne xDSL (Digital Subscriber Line) ou une ligne RNIS (Réseau Numérique à Intégration de Services) reliée au réseau d'accès RA correspondant.
Une liaison locale LL entre un ordinateur personnel et un terminal cellulaire mobile peut être une liaison filaire par exemple par câble série, ou cordon de raccordement de type Ethernet 100baseT, ou bus USB (Universal Serial Bus). La liaison locale LL peut être aussi une liaison sans fil par exemple du type DECT (digital Enhanced Cordless Telecommunications), ou infrarouge, ou satisfaisant une norme 802.11x (Bluethooth, WiFi).
Les dispositifs de traitement de données, les liaisons et les réseaux d'accès RA ne sont pas limités aux exemples ci-dessus et peuvent être constitués par d'autres dispositifs de traitement de données, de liaisons et réseaux d'accès connus.

Un fichier prédéterminé selon l'invention est un fichier numérique contenant classiquement des données personnelles à un usager, telles qu'une ou plusieurs images ou photos, un ou plusieurs morceaux musicaux, ou une ou plusieurs séquences vidéo.
Un fichier de localisation dans un dispositif selon l'invention comprend un ou plusieurs identificateurs de fichiers prédéterminés en correspondance chacun avec au moins une information de localisation du fichier prédéterminé. Un identificateur de fichier est un symbole ou une chaîne de caractères, telle que le nom de fichier, permettant d'identifier un fichier. Une information de localisation d'un fichier prédéterminé localise un fichier prédéterminé dans un premier dispositif et/ou au moins un deuxième dispositif. Par exemple, les informations de localisation D₁, D₂, D₃, D₇ correspondant à un fichier prédéterminé nommé "XXX" signifie que le fichier prédéterminé nommé "XXX" est mémorisé dans le premier dispositif identifié par D1 et dans les deuxièmes dispositifs identifiés respectivement par D₂, D₃ et D₇.
Un fichier de mise à jour selon l'invention d'un deuxième dispositif contient au moins un identificateur de fichiers prédéterminés.
De préférence, en correspondance avec l'identificateur de chaque fichier prédéterminé, le fichier de localisation et/ou le fichier de mise à jour contiennent également d'autres informations telles qu'un titre, une description et/ou un nom d'auteur du fichier prédéterminé.

Le procédé de localisation de fichier prédéterminé selon l'invention peut être mis en oeuvre dans un service de gestion d'un album de photo ou de morceaux musicaux ou de séquences vidéo entre différents dispositifs.

Les fichiers prédéterminés sont déterminés initialement par l'usager d'un premier dispositif qui sélectionne un ensemble de fichiers dans l'arborescence de fichiers de son dispositif.
Dans une variante, les fichiers prédéterminés sont déterminés en sélectionnant un répertoire. Dans cette variante, tous les fichiers contenus dans le répertoire sélectionné ou dans des sous-répertoires du répertoire sélectionné sont des fichiers prédéterminés, ainsi que les fichiers des répertoires portant le même nom que le répertoire sélectionné mais présents dans des deuxièmes dispositifs. Les fichiers prédéterminés sont ainsi identifiés par des adresses de fichiers ou une adresse de répertoire.
Dans une autre variante, les fichiers prédéterminés sont déterminés en fonction d'un type de fichier transmis par le premier dispositif aux deuxièmes dispositifs. Par exemple, un type de fichier est relatif à une séquence vidéo ou des images ou de la musique. Dans cette variante, un deuxième dispositif constitue son fichier de mise à jour selon le type de fichier requis.

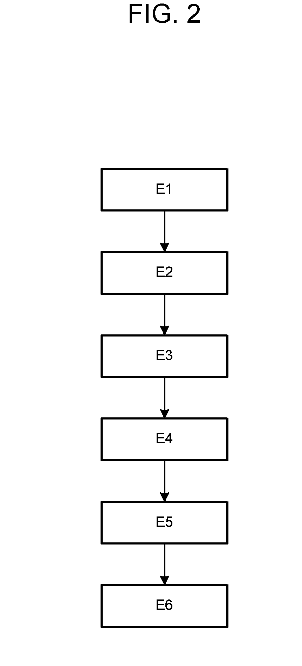

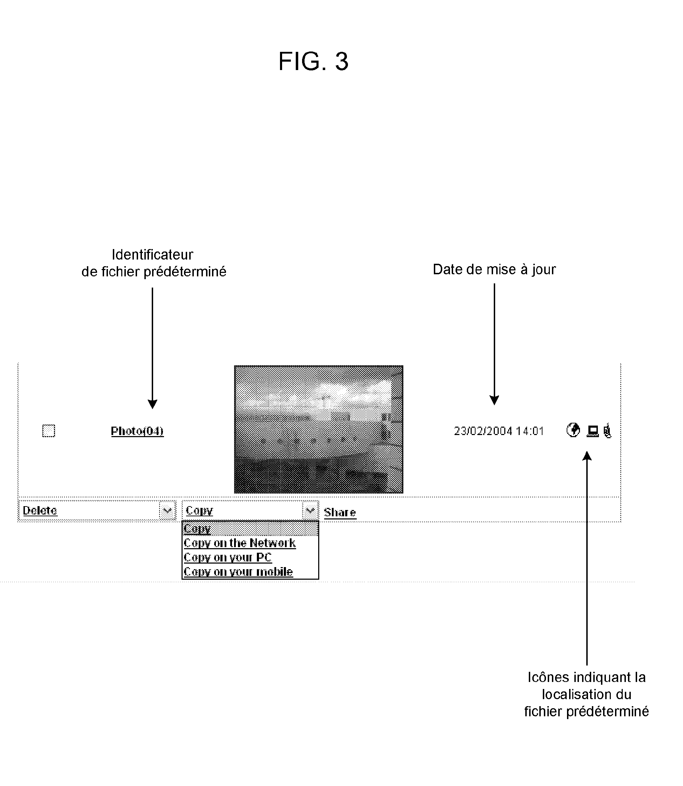

Le **procédé de localisation** de fichier prédéterminé comprend principalement six étapes E1 à E6, comme montré à la figure 2.
A l'étape E1, un usager d'un premier dispositif déclare un ensemble de deuxièmes dispositifs susceptibles de mémoriser des fichiers prédéterminés à travers le module d'interface utilisateur MU. La déclaration comprend principalement une identification de chaque deuxième dispositif par un identificateur. Classiquement un identificateur de dispositif est une adresse, telles qu'une adresse URL ou une adresse IP. Par exemple, l'usager souhaite tracer à partir de son ordinateur personnel Dₙ, en tant que premier dispositif, la localisation de fichiers prédéterminés sur son ordinateur personnel, son ordinateur portable D₁ et son appareil photo numérique D_{N-1} en tant que deuxièmes dispositifs. Dans cet exemple, l'usager peut déclarer l'adresse de son ordinateur personnel, son ordinateur portable et son appareil photo. L'usager peut également associer un icône de son choix à l'un respectif des deuxièmes dispositifs déclarés.
A l'étape E2, le module de mise à jour MM dans le premier dispositif crée un fichier de localisation de fichiers prédéterminés. Dans le fichier de localisation créé sont introduites des informations locales, c'est-à-dire des informations contenues dans le premier dispositif. Ces informations locales sont les identificateurs des fichiers prédéterminés mémorisés dans le premier dispositif en correspondance avec l'information de localisation suivante, fichier mémorisé dans "identificateur du premier dispositif", ainsi que les dates d'addition et/ou de suppression des fichiers prédéterminés correspondants. Dans une variante, le fichier de localisation est vide et l'introduction des informations locales dans celui-ci intervient lors de la mise à jour du fichier de localisation.
A l'étape E3, le module de mise à jour MM transmet des requêtes de mise à jour depuis le premier dispositif respectivement à chacun des deuxièmes dispositifs déclarés. Par exemple, l'ordinateur personnel Dₙ transmet des requêtes de mise à jour respectivement à l'appareil photo D_{N-1} et au terminal cellulaire mobile D₂.
A l'étape E4, le module de mise à jour MM dans chaque deuxième dispositif établit et transmet, en réponse à la requête de mise à jour respective, un fichier de mise à jour contenant au moins un identificateur de fichier prédéterminé. Par conséquent, le module de mise à jour MM du premier dispositif reçoit de chacun des deuxièmes dispositifs un fichier de mise à jour établi.
Dans une première variante, un fichier de mise à jour transmis par un deuxième dispositif contient les identificateurs de tous les fichiers prédéterminés mémorisés dans ledit deuxième dispositif. Dans cette variante, les fichiers prédéterminés, dont les identificateurs sont présents dans le fichier de mise à jour d'un deuxième dispositif, sont au moins localisés dans ce deuxième dispositif.
Dans une deuxième variante, un fichier de mise à jour d'un deuxième dispositif comprend des identificateurs de fichiers prédéterminés, associés respectivement à une information d'état indiquant si le fichier prédéterminé correspondant a été ajouté ou supprimé du deuxième dispositif correspondant et dont le fichier prédéterminé correspondant a été ajouté ou supprimé postérieurement à une date de dernière mise à jour prédéterminée. Contrairement à la première variante, il est nécessaire dans la deuxième variante de conserver dans le deuxième dispositif des informations de suppression de fichier prédéterminé. La date de dernière mise à jour prédéterminée est transmise avec la requête de mise à jour par le premier dispositif à l'étape E3. Une date de mise à jour peut correspondre à la dernière date à laquelle le premier dispositif a reçu un fichier de mise à jour provenant de tel deuxième dispositif. Le premier dispositif mémorise à chaque réception d'un fichier de mise à jour la date de mise à jour en correspondance avec l'identificateur du deuxième dispositif concerné. Un avantage de cette variante est la réduction de l'étendue du fichier de mise à jour transmis par le deuxième dispositif au premier dispositif.
Dans une troisième variante, un fichier de mise à jour d'un deuxième dispositif comprend des identificateurs de fichiers prédéterminés, associés respectivement à des informations de localisation de deuxièmes dispositifs associées respectivement à une information d'état indiquant si le fichier prédéterminé concerné a été ajouté ou supprimé du deuxième dispositif correspondant et à une date d'addition/suppression, et dont le fichier prédéterminé respectif a été ajouté ou supprimé dans l'un des deuxièmes dispositifs concernés postérieurement à une date de dernière mise à jour prédéterminée. Par exemple, un fichier de mise à jour transmis par un deuxième dispositif nommé D3 avec une date de dernière mise à jour égale au 16/10/04 contient les informations suivantes :
XXX: D2/A/10-10-04, D3/A/17-10-04, D4/S/14-10-04, D6/A/23-10-04,
YYY: D1/S/11-10-04, D4/A/29-10-04, D5/S/08-10-04,
ZZZ: D3/S/18-10-04,
avec A et S information d'état désignant respectivement un ajout et une suppression.
Le fichier de mise à jour transmis par le deuxième dispositif peut être extrait au moins d'une partie ou d'un sous-fichier du fichier de localisation du deuxième dispositif. Lorsqu'aucun fichier de localisation n'est mémorisé dans un deuxième dispositif, le deuxième dispositif crée un fichier de localisation contenant, par défaut, des informations locales, c'est-à-dire des informations sur les fichiers prédéterminés mémorisés dans le deuxième dispositif. Par exemple, un appareil photo numérique met à disposition en permanence un fichier de localisation contenant les informations sur des fichiers prédéterminés de photo mémorisés dans l'appareil.
A l'étape E5, le module de mise à jour MM du premier dispositif met à jour le fichier de localisation en fonction des fichiers de mise à jour transmis par les deuxièmes dispositifs déclarés.
Dans la première variante, le module de mise à jour MM du premier dispositif compare le contenu des fichiers de mise à jour transmis et le contenu du fichier de localisation qui n'est pas mis à jour et qui est mémorisé dans le premier dispositif, afin de supprimer dans le fichier de localisation les informations de localisation d'un fichier prédéterminé se rapportant à un deuxième dispositif dont le fichier de mise à jour ne fait aucune référence au fichier prédéterminé concerné et afin d'ajouter dans le fichier de localisation les informations de localisation présentes dans les fichiers de mise à jour et absentes du fichier de localisation à cet instant. Par exemple, lorsque le fichier de localisation du premier dispositif indique que le fichier prédéterminé nommé "XXX" est localisé dans les deuxièmes dispositifs D₂, D₃, Dₙ, et SA, et le fichier de mise à jour transmis par le deuxième dispositif D₃ ne fait aucune référence au fichier prédéterminé "XXX", alors le module de mise à jour MM du premier dispositif supprime l'information de localisation se rapportant au deuxième dispositif D₃ et associée au fichier prédéterminé "XXX".
Dans la deuxième variante, le module MM du premier dispositif met à jour le fichier de localisation en reportant dans les informations de localisation les ajouts et suppressions de fichiers prédéterminés indiqués dans les fichiers de mise à jour transmis. Par exemple, lorsqu'un fichier de mise à jour transmis au premier dispositif par un deuxième dispositif nommé D₄ indique l'ajout du fichier prédéterminé nommé "XXX" et la suppression du fichier prédéterminé nommé "YYY" dans le deuxième dispositif D₄, le module MM du premier dispositif ajoute l'information de localisation associée au deuxième dispositif D₄ et correspondant au fichier prédéterminé nommé "XXX" et supprime l'information de localisation associée au deuxième dispositif D₄ et correspondant au fichier prédéterminé "YYY".
Dans la troisième variante, le module MM du premier dispositif met à jour le fichier de localisation en reportant dans les informations de localisation les ajouts et suppressions de fichiers prédéterminés indiqués dans les fichiers de mise à jour transmis, en fonction des dates associées respectivement aux informations de localisation et d'une comparaison entre les informations de localisation associées à un identificateur de fichier prédéterminé présent dans plusieurs fichiers de mise à jour. Par exemple, les fichiers de mise à jour provenant des deuxièmes dispositifs D3 et D5 contiennent respectivement :
Provenance D3 :
   XXX : D2/A/06-10-04, D3/S/18-10-04, D4/A/10-10-04
   YYY : D2/A/04-10-04, D4/A/12-10-04
Provenance D5 :
   XXX : D2/S/10-10-04, D3/A/10-10-04
   WWW : D1/A/02-10-04, D4/S/26-10-04, D5/A/19-10-04.
Dans cet exemple, le fichier de localisation mis à jour du premier dispositif contient :
XXX : D2/S/10-10-04, D3/S/18-10-04, D4/A/10-10-04
YYY : D2/A/04-10-04, D4/A/12-10-04
WWW : D1/A/02-10-04, D4/S/26-10-04, D5/A/19-10-04.
Ainsi, un fichier de localisation d'un premier dispositif peut inclure des identificateurs désignant des fichiers prédéterminés qui ne sont pas mémorisés nécessairement dans le premier dispositif mais qui sont mémorisés, ou qui ont été mémorisés, dans au moins l'un de deuxièmes dispositifs. Par conséquent, un avantage de cette variante est de pouvoir localiser un fichier prédéterminé dans un deuxième dispositif qui n'est pas nécessairement interrogé par le premier dispositif à l'étape E3.
A l'étape E6, le module d'interface utilisateur MU affiche la ou les localisations de chaque fichier prédéterminé en fonction du fichier de localisation mis à jour à l'étape précédente dans le premier dispositif. Par exemple, le fichier prédéterminé nommé "XXX" est mémorisé dans l'ordinateur personnel Dₙ, le terminal cellulaire mobile D₂ et le serveur d'application SA. Un exemple visuel est donné à la figure 3 et des icônes indiqués par une flèche montre la localisation de la photo "04" en tant que fichier prédéterminé.

Un avantage de l'invention est de proposer à travers le module d'interface utilisateur MU l'addition d'un fichier prédéterminé dans au moins l'un des deuxièmes dispositifs déclarés à l'étape E1. Par exemple, un fichier prédéterminé localisé dans un ordinateur personnel et le serveur d'application SA peut être additionné dans un terminal mobile cellulaire.
Pour cela, l'usager du premier dispositif sélectionne depuis le premier dispositif un fichier prédéterminé à mémoriser dans un deuxième dispositif. Le premier dispositif vérifie dans son fichier de localisation que le fichier prédéterminé sélectionné n'est pas déjà mémorisé dans le deuxième dispositif. Si le fichier prédéterminé sélectionné n'est pas mémorisé dans le deuxième dispositif, le premier dispositif transfère le fichier prédéterminé sélectionné, plus exactement une copie du fichier prédéterminé, au deuxième dispositif. Le deuxième dispositif mémorise le fichier prédéterminé transféré. Le module de mise à jour du deuxième dispositif met à jour son fichier de localisation, c'est-à-dire en y ajoutant les informations de localisation du fichier prédéterminé transféré en correspondance à l'identificateur de celui-ci. Le deuxième dispositif transmet au premier dispositif un acquittement de mémorisation du fichier prédéterminé transféré. A la réception de l'acquittement de mémorisation, le premier dispositif met à jour son fichier de localisation par rapport au fichier prédéterminé transféré.

Un autre avantage de l'invention est la possibilité de supprimer un fichier prédéterminé de l'un des deuxièmes dispositifs déclarés à l'étape E1.
De la même manière que pour l'addition d'un fichier prédéterminé dans un deuxième dispositif, l'usager du premier dispositif sélectionne depuis le premier dispositif un fichier prédéterminé à supprimer dans un deuxième dispositif. Le premier dispositif vérifie dans son fichier de localisation que le fichier prédéterminé sélectionné est bien mémorisé dans le deuxième dispositif. Si le fichier prédéterminé sélectionné est mémorisé dans le deuxième dispositif, le premier dispositif transmet au deuxième dispositif une commande de suppression du fichier prédéterminé contenant au moins l'identificateur du fichier prédéterminé sélectionné. Le deuxième dispositif supprime le fichier prédéterminé sélectionné identifié par l'identificateur transmis, et met à jour son fichier de localisation en fonction du fichier prédéterminé sélectionné supprimé. Puis le deuxième dispositif transmet un acquittement de suppression au premier dispositif, afin que celui-ci mette à jour son fichier de localisation en fonction de la suppression réalisée.

Dans une variante, un premier ou deuxième dispositif contient plusieurs espaces de mémoire et les fichiers prédéterminés ne sont plus localisés seulement par rapport à un dispositif mais par rapport à un espace mémoire d'un dispositif.

Un troisième dispositif de traitement de données DS selon l'invention permet à un usager utilisant un service mettant en oeuvre le procédé selon l'invention de consulter à distance la localisation de fichiers prédéterminés. Pour cette mise en oeuvre, le troisième dispositif se connecte et s'identifie à distance au premier dispositif. Le premier dispositif délivre ensuite au troisième dispositif le contenu mis en forme d'un fichier de localisation propre à l'usager du troisième dispositif et mémorisé dans le premier dispositif afin que le troisième dispositif affiche la localisation de fichiers prédéterminés selon le fichier de localisation délivré. Le premier dispositif capable de cette mise en oeuvre est par exemple un serveur web d'application mettant à la disposition d'usagers des espaces mémoires personnels incluant des fichiers de localisation et communiquant avec des deuxièmes dispositifs.

L'invention décrite ici concerne un procédé et un système de localisation de fichier. Selon une implémentation préférée, les étapes du procédé sont déterminées par des instructions d'un programme de localisation de fichier incorporé dans un dispositif informatique tel qu'un ordinateur personnel ou un serveur applicatif. Le programme comporte des instructions de programme qui, lorsque ledit programme est chargé et exécuté dans le dispositif informatique dont le fonctionnement est alors commandé par l'exécution du programme, réalisent les étapes du procédé selon l'invention.
En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation et être sous la forme de code source, code objet, ou de code intermédiaire entre code source et code objet tel que dans une forme partiellement compilée, ou dans n'importe quelle autre forme souhaitable pour implémenter un procédé selon l'invention.
Le support d'informations peut être n'importe quel dispositif ou entité capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.
Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé pour localiser au moins un fichier prédéterminé depuis un premier dispositif de traitement de données, le fichier prédéterminé étant mémorisé dans le premier dispositif ou dans au moins un deuxième dispositif de traitement de données connecté au premier dispositif, **caractérisé en ce qu'**il inclut des étapes de :
création (E2) d'un fichier de localisation de fichier prédéterminé dans le premier dispositif,
transmission (E3) de requêtes depuis le premier dispositif respectivement aux deuxièmes dispositifs,
réception (E4) par le premier dispositif d'un fichier de mise à jour transmis par chaque deuxième dispositif et contenant au moins un identificateur de fichier prédéterminé, et
mise à jour (E5) du fichier de localisation en fonction d'au moins un fichier de mise à jour reçu par le premier dispositif.

2. Procédé conforme à la revendication 1, selon lequel un fichier de mise à jour transmis par un deuxième dispositif comprend au moins un identificateur de fichier prédéterminé correspondant à un fichier prédéterminé qui a été ajouté ou supprimé dans ce deuxième dispositif postérieurement à une date de dernière mise à jour prédéterminée, chaque identificateur étant associé à une information d'état indiquant si le fichier prédéterminé correspondant a été ajouté ou s'il a été supprimé.

3. Procédé conforme à l'une des revendications 1 ou 2, selon lequel un fichier de mise à jour transmis par un deuxième dispositif comprend au moins un identificateur de fichier prédéterminé correspondant à un fichier prédéterminé qui a été ajouté ou supprimé dans au moins l'un des deuxièmes dispositifs, appelé dispositif courant, postérieurement à une date de dernière mise à jour prédéterminée, chaque identificateur étant associé à au moins une information de localisation du fichier prédéterminé correspondant dans le dispositif courant, chaque information de localisation étant associée, d'une part, à une information d'état indiquant si le fichier prédéterminé correspondant a été ajouté ou s'il a été supprimé, et, d'autre part, à une date d'addition/suppression.

4. Procédé conforme à l'une quelconque des revendications 1 à 3, comprenant en outre une étape de sélection par le premier dispositif d'un fichier prédéterminé, et une étape de transmission du fichier sélectionné vers un deuxième dispositif, ladite étape de transmission étant destinée à être exécutée lorsque le fichier sélectionné n'est pas déjà mémorisé dans ce deuxième dispositif.

5. Procédé conforme à l'une quelconque des revendications 1 à 4, comprenant en outre une étape de sélection par le premier dispositif d'un fichier prédéterminé, et une étape de transmission vers un deuxième dispositif d'une commande de suppression du fichier prédéterminé sélectionné, ladite étape de transmission étant destinée à être exécutée lorsque le fichier prédéterminé sélectionné est mémorisé dans ce deuxième dispositif.

6. Système informatique pour localiser au moins un fichier prédéterminé depuis un premier dispositif de traitement de données, le fichier prédéterminé étant mémorisé dans le premier dispositif ou dans au moins un deuxième dispositif de traitement de données connecté au premier dispositif, **caractérisé en ce qu'**il comprend :
un moyen (MM) pour créer un fichier de localisation de fichier prédéterminé dans le premier dispositif,
un moyen (MM) pour transmettre des requêtes depuis le premier dispositif respectivement aux deuxièmes dispositifs,
un moyen (MM) pour transmettre en réponse, depuis chaque deuxième dispositif vers le premier dispositif, un fichier de mise à jour contenant au moins un identificateur de fichier prédéterminé, et
un moyen (MM) pour mettre à jour un fichier de localisation en fonction d'au moins un fichier de mise à jour reçu par le premier dispositif.

7. Dispositif (Dₙ) de localisation d'au moins un fichier prédéterminé, le fichier prédéterminé étant mémorisé dans le dispositif de localisation ou dans au moins un deuxième dispositif de traitement de données connecté au dispositif de localisation, **caractérisé en ce qu'**il comprend :
un moyen (MM) pour créer un fichier de localisation de fichier prédéterminé,
un moyen (MM) pour transmettre des requêtes respectivement aux deuxièmes dispositifs,
un moyen (MM) pour recevoir un fichier de mise à jour transmis par un deuxième dispositif et contenant au moins un identificateur de fichier prédéterminé, et
un moyen (MM) pour mettre à jour un fichier de localisation en fonction d'au moins un fichier de mise à jour reçu par le dispositif de localisation.

8. Dispositif de traitement de données destiné à être connecté à un dispositif de localisation d'au moins un fichier prédéterminé, le fichier prédéterminé étant mémorisé dans le dispositif de localisation ou dans le dispositif de traitement de données connecté au dispositif de localisation, dispositif de traitement **caractérisé en ce qu'**il comprend :
un moyen (MM) pour recevoir une requête transmise par le premier dispositif,
un moyen (MM) pour transmettre en réponse au premier dispositif un fichier de mise à jour contenant au moins un identificateur de fichier prédéterminé, afin que le premier dispositif mette à jour un fichier de localisation en fonction du fichier de mise à jour transmis.

9. Programme d'ordinateur apte à être mis en oeuvre dans un premier dispositif de traitement de données du type ordinateur pour localiser au moins un fichier prédéterminé depuis un premier dispositif de traitement de données, le fichier prédéterminé étant mémorisé dans le premier dispositif ou dans au moins un deuxième dispositif de traitement de données connecté au premier dispositif, ledit programme comprenant des instructions de programme qui, lorsque le programme est chargé et exécuté dans le premier dispositif, réalisent les étapes de:
création (E2) d'un fichier de localisation de fichier prédéterminé dans le premier dispositif,
transmission (E3) de requêtes depuis le premier dispositif respectivement aux deuxièmes dispositifs,
réception (E4) par le premier dispositif d'un fichier de mise à jour transmis par chaque deuxième dispositif et contenant au moins un identificateur de fichier prédéterminé, et
mise à jour (E5) du fichier de localisation en fonction d'au moins un fichier de mise à jour reçu par le premier dispositif.
